Europäisches Patentamt

European Patent Office

Office européen des brevets

(19)

(11) Veröffentlichungsnummer : **0 034 828**
**B1**

(12) # EUROPÄISCHE PATENTSCHRIFT

(45) Veröffentlichungstag der Patentschrift :
15.08.84

(51) Int. Cl.³ : **F 16 B 43/00**

(21) Anmeldenummer : 81101296.2

(22) Anmeldetag : 23.02.81

(54) **Befestigungsteil für durch Einprägungen verformte Kunststoffolien zum Schutz von Grundmauern.**

(30) Priorität : 23.02.80 DE 3006820

(43) Veröffentlichungstag der Anmeldung :
02.09.81 Patentblatt 81/35

(45) Bekanntmachung des Hinweises auf die Patenterteilung : 15.08.84 Patentblatt 84/33

(84) Benannte Vertragsstaaten :
AT BE CH FR LI LU SE

(56) Entgegenhaltungen :
DE-U- 7 638 087
FR-A- 2 015 087
FR-A- 2 238 084
NO-C- 107 188
US-A- 3 212 387

(73) Patentinhaber : ROMA Rosemeier GmbH & Co. KG
Postfach 1747
D-4973 Vlotho (DE)

(72) Erfinder : Rosemeier, Heinrich Willi
Dipl.-Ing. Dipl.-Wirtsch. Ing. Kurze Strasse 19
D-4973 Vlotho (DE)

(74) Vertreter : Kador . Klunker . Schmitt-Nilson . Hirsch
Corneliusstrasse 15
D-8000 München 5 (DE)

EP 0 034 828 B1

## Beschreibung

Die Erfindung betrifft ein Befestigungsteil für durch Einprägungen verformte Kunststoffolien zum Schutz von Grundmauern.

Zum Schutz von Grundmauern werden verformte Kunststoffolien verwendet, im folgenden kurz Folien genannt, die in ihre Oberfläche eingebrachte Einprägungen unterschiedlicher Formen, z. B. Kegelstumpf- oder Pyramidenstumpfform aufweisen. Die Folien werden mit den Böden ihrer Einprägungen and die Grundmauern gelegt und befestigt, so daß zwischen den Grundmauern und den Folienoberflächen, an die das Erdreich der Baugrubenverfüllung grenzt, eine Luftschicht entsteht. Die Luftschicht bewirkt beim Einsatz der Folien zum Schutz gegen Bodenfeuchtigkeit neben dem Abdichtungseffekt des Folienmaterials eine Grundmauertrocknung (siehe NO-C-107 188). Beim Einsatz zum Schutz herkömmlicher Abdichtungen, z. B. bituminöser Anstriche, gegen mechanische Beschädigung bei der Baugrubenverfüllung bewirkt die Luftschicht einen Puffereffekt durch das Zusammenspiel mit der Festigkeit und Zähigkeit des Materials der Folien.

Die Folien werden bisher mit Stahlnägeln, Schußbolzen oder Schrauben, im folgenden kurz Nägel als Sammelbegriff genannt, an den Grundmauern befestigt. Dabei werden die Nägel auf den Folienflächen zwischen den Einprägungen angesetzt, um einen direkten Kontakt zwischen dem feuchten Erdreich und den Grundmauern zu vermeiden, der beim Nageln in die Böden der Einprägungen wirksam würde.

Nach für die Bauaufsicht verbindlichen Normen ist diese Befestigungsart beim Einsatz der Folien zum Schutz herkömmlicher Abdichtungen untersagt, da die Nägel die Abdichtungsschichten durchdringen und damit ihre Wasserdichtigkeit gefährden. Bei der Baugrubenverfüllung und der späteren Setzung bewirkt das angeschüttete Erdreich eine Zugbelastung der Folien, deren Nagellöcher häufig aufgeweitet und damit undicht oder sogar ausgerissen werden.

Gegenstand der Erfindung ist ein Befestigungsteil für durch Einprägungen verformte Kunststoffolien, das stelzenartige Teile aufweist, die in einen oder mehrere Böden von Einprägungen der Kunststoffolien drücken und so die Kunststoffolien durch Haftreibung an den Grundmauern befestigen, und das selbst durch einen oder mehrere, zwischen den stelzenartigen Teilen angesetzte Stahlnägel, Schußbolzen oder Schrauben gehalten ist. Die stelzenartigen Teile können über der unverformten Oberfläche der Folien durch ein biegesteifes Teil miteinander verbunden sein. Eine zusätzliche Haltekraft kann durch Formschlüssigkeit des Befestigungsteils mit Teilen der Wände der Einprägungen in den Folien erreicht werden. Zu diesem Zweck können die Oberflächen der stelzenartigen Teile ganz oder teilweise die Form der Wände der Einprägungen haben.

Für die unterschiedlichen Einsatzzwecke der Folien werden Variationen des Befestigungsteils verwendet.

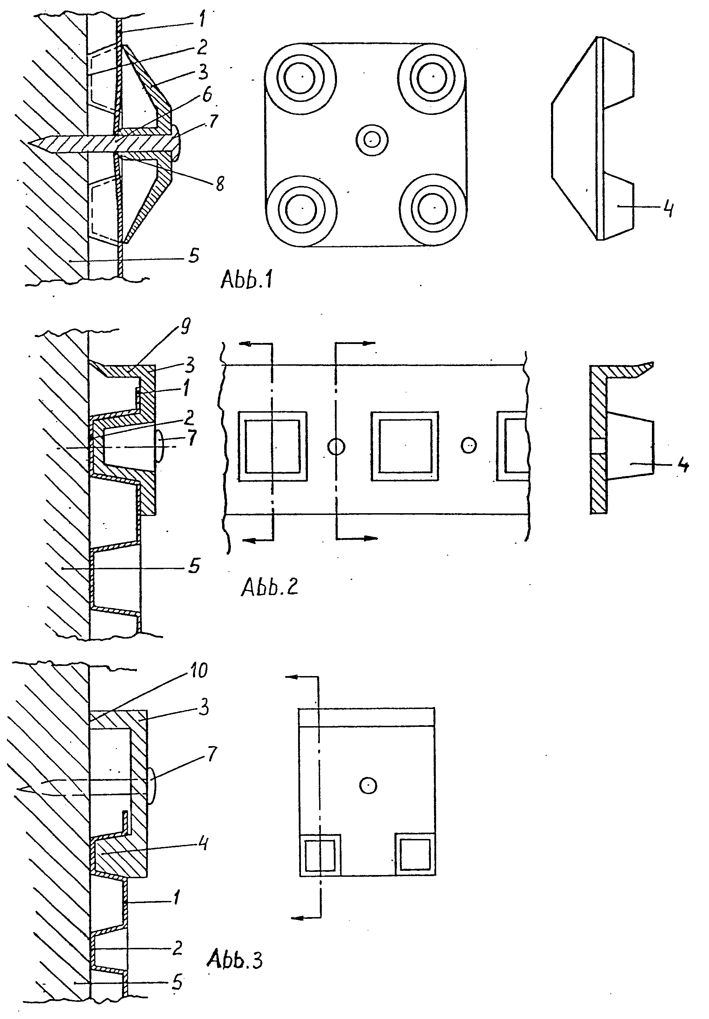

Abb. 1 zeigt links einen Schnitt durch die Folie 1 mit kegelstumpfförmigen Einprägungen 2 und durch ein Befestigungsteil 3, das mit seinen stelzenartigen Teilen 4 die Folie 1 in vier Einprägungen an die Grundmauer 5 drückt. Das Loch 6 des Nagels 7 in der Folienfläche wird durch die Dichtung 8 verschlossen. Rechts sind Ansichten dieses Befestigungsteils 3 gezeigt.

Abb. 2 zeigt eine Ausführung des Befestigungsteils 3, das Folien 1 mit pyramidenstumpfförmigen Einprägungen 2 in der oberen Reihe dieser Einprägungen 2 festhält. Der obere Schenkel 9 deckt den Luftspalt zwischen der Grundmauer 5 und der Folienoberfläche ab.

Abb. 3 stellt eine Ausführung des Befestigungsteils 3 dar, bei dem der Nagel 7 außerhalb der von den Folien 1 geschützten Grundmauerfläche angreift. Der zwischen der Grundmauerauflage 10 und den stelzenartigen Teilen 4 des Befestigungsteils 3 angesetzte Nagel 7 bewirkt eine Hebelkraft, die die stelzenartigen Teile 4 fest and die Böden der Einprägungen 2 der Folien 1 anpreßt.

Beim Einsatz zum Schutz von Grundmauern gegen Erdfeuchtigkeit wird das Befestigungsteil an beliebiger Stelle der Folien angesetzt ; es kann z. B. Folienüberlappungen im unteren Grundmauerbereich anpressen. Der Nagel greift am biegesteifen Teil zwischen den stelzenartigen Teilen an. Das Nagelloch des Befestigungsteils mündet an der Folienseite in eine als Dichtung ausgebildete Erhöhung, die sich eng an den Rand des Nagellochs der Folie anschmiegt (siehe Abb. 1).

Bei einer Variante dieser Ausführung werden die Folien nur in der obersten oder in mehreren oberen Reihen ihrer Einprägungen gehalten, wobei die stelzenartigen Teile des Befestigungsteils in einer oder mehreren Reihen auf einer Art Leiste angeordnet sind. Diese Leiste kann einen oberen zur Grundmauer gerichteten Schenkel haben, der den Luftspalt zwischen der Grundmauer und der Folienoberfläche abdeckt (siehe Abb. 2).

Beim Einsatz der Folien zum Schutz herkömmlicher Abdichtungen, durch die nicht hindurchgenagelt werden darf, hält das Befestigungsteil die Folien nur an ihrem oberen Rand. Das Befestigungsteil ist dabei nach oben über den oberen Rand der Folien hinaus verlängert, wobei das Ende der Verlängerung eine Grundmauerauflage bildet. Der Nagel greift zwischen der Grundmauerauflage und dem oberen Folienrand an und bewirkt eine Hebelkraft, die die stelzenartigen Teile des Befestigungsteils fest an die Böden der Einprägungen der Folien preßt (siehe Abb. 3).

## Ansprüche

1. Befestigungsteil für durch Einprägungen verformte Kunststoffolien (1) zum Schutz von Grundmauern (5), dadurch gekennzeichnet, daß es stelzenartige Teile (4) aufweist, die in die Böden der Einprägungen (2) der Kunststoffolien (1) drücken und so die Kunststoffolien durch Haftreibung an den Grundmauern (5) befestigen, und daß das Befestigungsteil (3) selbst durch einen oder mehrere, zwischen den stelzenartigen Teilen angesetzte Stahlnägel (7), Schußbolzen oder Schrauben gehalten ist.

2. Befestigungsteil nach Anspruch 1, dadurch gekennzeichnet, daß es die Kunststoffolien (1) durch Formschlüssigkeit seiner stelzenartigen Teile (4) mit Teilen der Wände der Einprägungen (2) der Kunststoffolien festhält.

3. Befestigungsteil nach den Ansprüchen 1 und 2, dadurch gekennzeichnet, daß es die Kunststoffolien (1) durch Eingreifen seiner stelzenartigen Teile (4) in eine oder mehrere obere Reihen der Einprägungen (2) der Kunststoffolien nur am oberen Rand befestigt.

4. Befestigungsteil nach Anspruch 3, dadurch gekennzeichnet, daß es leistenartig ausgebildet ist und einen oberen Schenkel (9) aufweist, der den Luftspalt zwischen den Grundmauern (5) und den Oberflächen der Kunststoffolien (1) abdeckt.

5. Befestigungsteil nach Anspruch 3, dadurch gekennzeichnet, daß es eine Ausdehnung über den oberen Folienrand hinaus aufweist und daß es durch einen oder mehrere Stahlnägel (7), Schußbolzen oder Schrauben, die über der Oberkante der Kunststoffolien (1) angesetzt ist bzw. sind, gehalten ist.

## Claims

1. A fastening means for embossed plastics sheets (1) for the protection of foundation walls (5), characterized in that it comprises stilt-like parts (4) which press into the bottoms of the embossed areas (2) of the plastics sheets (1), thereby fastening the plastics sheets to the foundation walls (5) by adhesive friction, and in that the fastening means (3) itself is mounted by means of one or several steel nails (7), power-fastened bolts or screws, which is/are applied between the stilt-like parts.

2. A fastening means according to claim 1, characterized in that it holds the plastics sheets (1) due to the positive-lock design of its stilt-like parts (4) with parts of the walls of the embossed areas (2) of the plastics sheets.

3. A fastening means according to claims 1 and 2, characterized in that it fastens the plastics sheets (1) only at the upper margin by engagement of its stilt-like parts (4) with one or several upper rows of the embossed areas (2) of the plastics sheets.

4. A fastening means according to claim 3, characterized in that it is of strip-like configuration and comprises an upper leg (6) which covers the air gap between the foundations walls (5) and the surfaces of the plastics sheets (1).

5. A fastening means according to claim 3, characterized in that it comprises an extension beyond the upper sheet margin and in that it is mounted by means of one or several steel nails (7), power-fastened bolts or screws, which is/are applied above the upper edge of the plastics sheets (1).

## Revendications

1. Attache pour feuilles de plastique (1) de forme correspondant à des empreintes, pour la protection des murs de fondation (5), caractérisée en ce qu'elle présente des parties (4) en forme d'échasse qui appuient dans les fonds des empreintes (2) des feuilles de plastique (1) et fixent ainsi les feuilles de plastique contre les murs de fondation (5) par frottement par adhérence ; et en ce que l'attache elle-même est fixée par un ou plusieurs clous d'acier (7), une ou plusieurs chevilles à percussion ou vis, disposés entre les parties en forme d'échasse.

2. Attache selon la revendication 1, caractérisée en ce qu'elle fixe les feuilles de plastique (1) par liaison de par la forme de ses parties en forme d'échasse (4) avec des parties des parois des empreintes (2) des feuilles de plastique.

3. Attache selon les revendications 1 et 2, caractérisée en ce qu'elle ne fixe les feuilles de plastique (1) que par leur bord supérieur du fait que ses parties en forme d'échasse (4) viennent se loger dans une ou plusieurs rangées supérieures des empreintes (2) des feuilles de plastique.

4. Attache selon la revendication 3, caractérisée en ce qu'elle a la forme d'une baguette et présente une aile supérieure (9) qui recouvre le jeu d'air existant entre les murs de fondation (5) et les surfaces des feuilles de plastique (1).

5. Attache selon la revendication 3, caractérisée en ce qu'elle présente un prolongement au-delà du bord supérieur des feuilles et en ce qu'elle est fixée par un ou plusieurs clous d'acier (7), une ou plusieurs chevilles à percussion ou vis disposé ou disposés au-delà du bord supérieur des feuilles de plastique (1).

Abb.1

Abb.2

Abb.3